# EUROPEAN PATENT SPECIFICATION

(11) **EP 1 264 108 B1**
(45) Date of publication and mention of the grant of the patent: **25.08.2004**
(21) Application number: 01912593.9
(22) Date of filing: 05.03.2001
(51) Int. Cl.: F15B 15/26, F15B 11/20, B62D 33/07

(54) **HYDRAULIC ACTUATING DEVICE**
HYDRAULISCHES STELLGLIED
DISPOSITIF DE COMMANDE HYDRAULIQUE

(30) Priority: 16.03.2000 NL 1014661
(43) Date of publication of application: 11.12.2002
(73) Proprietor: Actuant Corporation, Glendale, Wisconsin 53209-3703 (US)
(72) Inventor: OUDELAAR, Tone, NL-7576 CA Oldenzaal (NL)
(74) Representative: Brookhuis, Hendrik Jan Arnold
(86) International application number: PCT/NL2001/000181
(87) International publication number: WO 2001/069092

(56) References cited:
- GB-A- 1 372 659
- NL-A- 9 401 680
- NL-A- 9 500 236
- US-A- 2 947 376
- PATENT ABSTRACTS OF JAPAN vol. 006, no. 263 (M-181), 22 December 1982 (1982-12-22) & JP 57 155168 A (HINO JIDOSHA KOGYO), 25 September 1982 (1982-09-25) cited in the application

## Description

The present invention relates to a hydraulic actuating device according to the preamble of claim 1.

A hydraulic actuating device of this type is known, for example, from GB i 372 659, upon which the preamble of claim 1 is based. In this known device, the drive actuator is responsible for tilting a vehicle cab, for example in order to provide access to an engine arranged beneath the cab, so that maintenance work can be carried out.

In this known device, a mechanical latching device is provided, which latches the cab in its untilted driving position. This latching device comprises a movable latch element and an associated hydraulic latch actuator. This latch actuator is designed and incorporated in the hydraulic system in such a manner that the latching device is unlatched before the drive actuator tilts the cab. As described in GB 1 372 659, this hydraulic unlatching has the advantage over the known manual unlatching of the latching device that it is impossible to forget to unlatch the latching device before the drive actuator is operated. An error of this nature could cause damage to the latching device.

Hydraulic actuating devices for tilting a vehiclè cab in which a mechanical latching device prevents the cab which has previously been tilted from unintentionally tilting back are also known. Examples of a latching device of this type are described in NL 9401680, JP 57-155168 and US 2 947 376. In these known devices, it is provided that - if it is desired for the cab to be tilted back into the driving position - the latching device is unlatched by hand.

In still further known hydraulic actuating devices for tilting a vehicle cab, the latching device is coupled to the knob by means of which the control valve which connects the . delivery side of the pump of the tilting device to one or other chamber of the drive actuator is actuated. In this case, the coupling is mechanical and is such that - if the knob is moved into the position in which the cab can be tilted back into the driving position - the latching device is unlatched.

If the latching device is designed to protect the tilted cab from tilting back unintentionally, manual unlatching has the drawback that the latching can even be eliminated before the operation of tilting the cab back with the aid of the drive actuator has commenced, leading to an undesirable and dangerous situation.

The drawing in GB 1 372 659 shows that a spring urges the latch element into its latched position. As an alternative, GB 1 372 659 proposes that this spring be replaced by a hydraulic actuation means, which is not described in further detail.

It is an object of the present invention to provide an actuating device with an improved hydraulic latch actuator, which improvement relates in particular to the reliability of the latch actuator itself and to the safety of the overall actuating device.

A further object is to provide a hydraulic actuating device for tilting a vehicle cab with a reliable mechanical latching arrangement, in particular for latching the cab in a tilted position.

The invention achieves these objects by providing a hydraulic actuating device according to claim 1.

The design of the latch actuator ensures that, when the direction of flow of the fluid in the line in which the latch actuator is accommodated is reversed, the piston of the latch actuator according to the invention moves towards the other limit position.

It will be clear that the use of the actuating device according to the invention is not restricted to the tilting of cabs of motor vehicles. In another exemplary application, the hydraulic drive actuator actuates a cover, hatch or roof and the hydraulic latch actuator actuates the latching device with which the cover, hatch or roof is locked. This situation may be encountered, for example, in a motor vehicle of the convertible type, in which the front edge of the convertible top can be latched to the header above the windscreen or in which the tonneau cover or the boot lid can be latched to the body. In these exemplary applications, the latching device could also be arranged between the piston/piston rod assembly of the drive actuator which drives the moving object and the housing of this drive actuator.

The drive actuator and the latch actuator may each be of the linear type, with a piston/piston rod assembly which can move in a linearly reciprocating manner in the cylinder space, the piston rod which is coupled to the piston projecting outwards through one or both end pieces of the housing of the actuator. However, other embodiments of the drive actuator and latch actuator are also conceivable, for example the drive actuator and/or the latch actuator may be an actuator with a rotatable output shaft, for example of the vane or screw type.

Advantageous embodiments of the actuating device according to the invention are described in the claims and will be explained in more detail below with reference to the drawing, in which:
Fig. 1 diagrammatically depicts the hydraulic actuating device according to the invention, which is shown in Figure 2, for tilting a vehicle cab,
Fig. 2 shows a longitudinal section through a hydraulic drive actuator for a vehicle cab with associated hydraulically actuable latching means according to the invention,
Figs. 3a, 3b show cross sections on line III-III in Figure 2 through the hydraulic drive actuator with the latching means in the unlatched position and the latched position, respectively,
Figs. 4a, 4b show cross sections through the latch actuator of the device shown in Figure 2 in the latched position of the drive actuator,
Figs. 5a, 5b show cross sections through the latch actuator of the device shown in Figure 2 in the unlatched position of the drive actuator, and
Figs. 6a, 6b show a detail from Figure 2 on an enlarged scale, in the unlatched and latched positions, respectively.

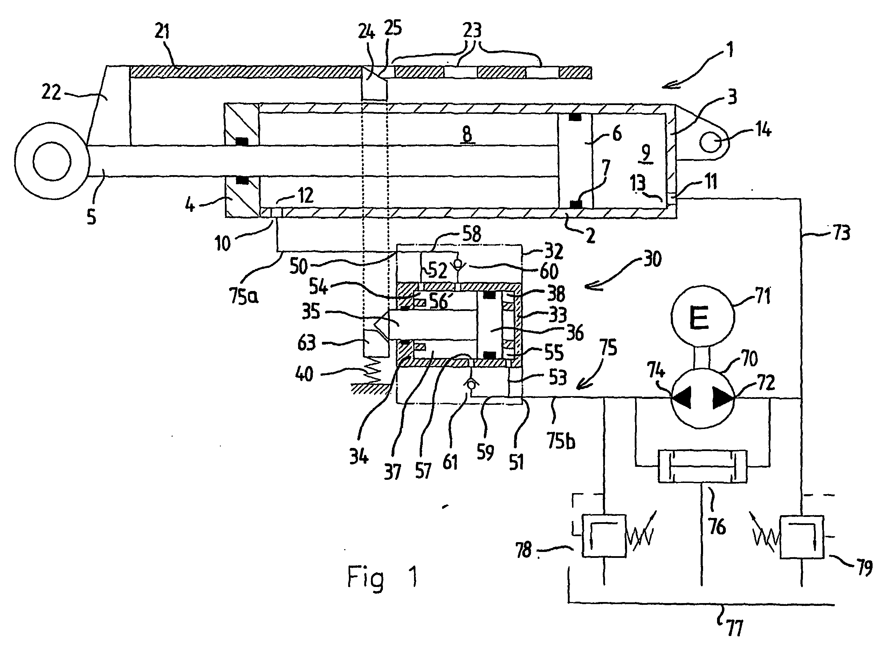

Figure 1 diagrammatically depicts a hydraulic actuating device for tilting a vehicle cab. It will be clear that this application is only an advantageous possible use of the actuating device according to the invention and that the invention is not restricted to an application of this type.

The actuating.device comprises a hydraulic drive actuator 1, which is fitted at a suitable position between the chassis of the vehicle, on the one hand, and the tiltable cab, on the other hand.

The drive actuator 1 comprises a housing 2 in which there is a cylinder space which at its axial ends is delimited by a first end piece 3 and a second end piece 4 of the housing.

A piston/piston rod assembly can move in a reciprocating manner in the cylinder space and has a piston rod 5, which projects outwards through the second end piece 4, and a piston 6, which bears in a sealed manner, by means of a sealing ring 7, against the cylinder wall, so that a first chamber 8 and a second chamber 9, which each have a volume which is dependent on the position of the piston/piston rod assembly, are delimited in the cylinder space.

The housing 2 is provided with a first connection 10 and a second connection 11, which are each in communication, via an associated passage, with a first and second port 12, 13, respectively, which in every position of the piston/piston rod assembly are in communication with the first and second chambers 8, 9, respectively.

Attachment means, in this case an attachment eyelet 14, are provided on the housing 2 for attaching the drive actuator 1 to the chassis or the cab.

The drive actuator 1 has an associated latching device 20 for latching the piston/piston rod assembly 5, 6 with respect to the housing 2, which latching device is in this case designed in such a manner that the piston/piston rod assembly 5, 6 cannot be retracted unintentionally. This protection is particularly important if the cab is tilted and, for example, maintenance work is being carried out on the vehicle engine which is arranged beneath the cab.

In this example, the latching device 20 comprises a first elongate latch element 21, which in this case is in the form of a stable steel section, which at a location outside the housing 2 of the drive actuator 1 is arranged on the piston rod 5 via a support 22. The first latch element 21 extends alongside the outer side of the housing 2 of the drive actuator 1, more or less parallel to the longitudinal axis of the drive actuator 1.

In the first latch element 21 there is a series of recesses 23, which lie at a distance from one another in the direction of movement of the latch element 21 alongside the housing 2 of the drive actuator 1.

The latching device 20 also comprises a movable second latch element 24, which can move between an unlatched position and a latched position, the second latch element 24 fitting into a latching recess 23 in the latched position, in such a manner that the piston/piston rod assembly 5, 6 cannot retract with respect to the housing 2.

As indicated by dot-dashed lines in Figure 1, the second latch element 24 is coupled to associated hydraulic latching actuating means, which are to be described in more detail, for moving the second latch element 24 into the unlatched position.

A spring return mechanism with spring 40 is provided in order to move the second latch element 24 into the latched position. In practice, the spring 40 is preferably arranged between the housing 2 and the second latch element 24.

The first and second latch elements 21, 24 are designed in such a manner that, when the piston/piston rod assembly 5, 6 of the drive actuator 1 is extended, the second latch element 24 is displaced, counter to the force of the spring 40, into the unlatched position, under the influence of the force exerted on the second latch element by the first latch element 21. This action is in this example obtained by providing one side of the second latch element 24 with a bevelled side 25.

The hydraulic latch actuating means comprise a hydraulic latch actuator 30.

The hydraulic latch actuator 30 comprises a housing 32, which is represented by a dot-dashed contour and has a cylinder space inside it, which at its axial ends is delimited by a first end piece 33 and a second end piece 34 of the housing 32.

A piston/piston rod assembly can move in a reciprocating manner in the cylinder space of the latch actuator 30 and has a piston rod 35, which projects outwards through the second end piece 34, and a piston 36, which bears in a sealed manner against the cylinder wall, so that a first chamber 37 and a second chamber 38 are delimited in the cylinder space, each having a volume which is dependent on the position of the piston/piston rod assembly 35, 36.

The housing 32 is provided with a first connection 50 and a second connection 51, which are each in communication, via an associated passage 52, 53, with a first port 54 and second port 55, respectively, which in every position of the piston/piston rod assembly 35, 36 are connected to the first and second chambers 37, 38, respectively.

Furthermore, a third port 56 and fourth port 57 are connected to the cylinder space of the latch actuator 30, which third and fourth ports are each in communication, depending on the position of the piston/piston rod assembly 35, 36, with the first chamber 37 or the second chamber 38 of the latch actuator 30.

The third port 56 is in communication, via a passage 58 formed in the housing 32, with the first connection 50, and the fourth port 57 is in communication, via a passage 59 formed in the housing 32, with the second connection 51.

A nonreturn valve 60 which closes in the direction of the third port 56 is provided in the passage 58 between the third port 56 and the first connection 50.

A nonreturn valve 61 which closes in the direction of the fourth port 58 is provided in the passage 59 between the fourth port 58 and the second connection 51.

In the present example, the housing 32 of the latch actuator 30 is fixed to the housing 2 of the drive actuator 1.

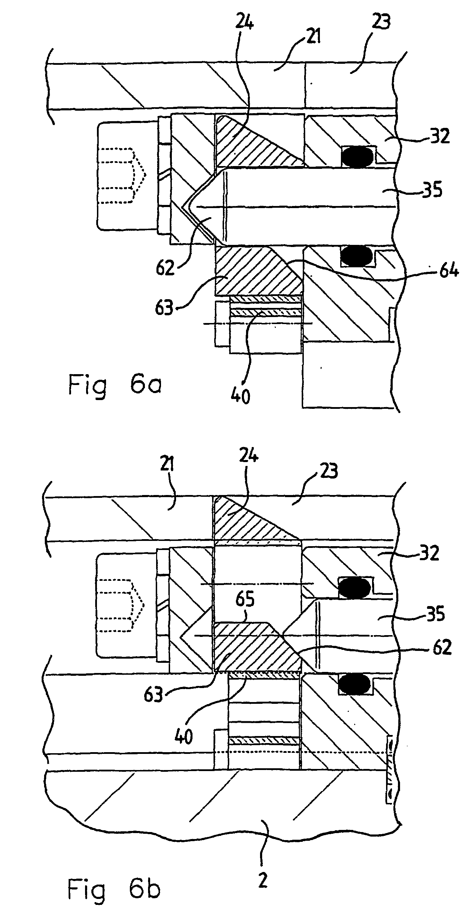

Particularly in Figures 6a, 6b, it can be seen clearly that the end of the piston rod 35 which projects outwards actuates the second latch element 24. In this example, the end of the piston rod 35 is provided with a bevel, in this case in the form of a conical surface 62. An engagement element 63, which is provided with an inclined surface 64 and a surface 65 which extends in the direction of movement of the piston rod 35, is attached to the second latch element 24. When the piston rod 35 is extended, the interaction of the surfaces 62, 63 effects a displacement of the second latch element 24 counter to the spring 40. The piston rod 35 then slides over the surface 65, so that the second latch element 24 is held in its unlatched position independently of the hydraulic pressure in the chamber 38. Simply by supplying fluid to the chamber 37, the piston rod 35 can be moved back out of this position.

The actuating device also comprises a hydraulic pump 70, in this example with a reversible pumping direction, which pump 70 is driven by an associated electric motor 71.

The port 72 of the pump 70 is connected, via a line 73, to the second connection 11 of the drive actuator 11.

A line 75 is present between the other port 74 of the pump and the first connection 10 of the drive actuator 1.

The latch actuator 30 is accommodated in this line 75, in such a manner that a line part 75a connects the first connection 10 of the drive actuator 1 directly to the first connection 50 of the latch actuator 30, and in such a manner that a line part 75b connects the second connection 51 of the latch actuator 30 to the port 74.

Furthermore, the two ports 72, 74 are connected to a suction shuttle valve 76 in a line leading to the reservoir 77. In addition, pressure-relief valves 78, 79 are provided.

The way in which the hydraulic tilting device which has been explained with reference to Figure 1 operates is as follows.

If it is desired for the piston/piston rod assembly 5, 6 of the drive actuator 1 to be extended, the pump 70 is set in operation, so that pressurized hydraulic fluid is fed to the chamber 9 via the line 73.

Hydraulic fluid will then flow out of the chamber 8 via the line 75a. If the piston/piston rod assembly 35, 36 is not yet in the position shown in Figure 1, the supply of hydraulic fluid to the chamber 37 will ensure that this position is reached. This is because the assembly 35, 36 will move towards the retracted position until the port 57 comes into communication with the chamber 37. From that moment, the fluid from the chamber 8 can pass through the chamber 37 and enter the line part 75b and, along this, reaches the port 74, which then serves as a suction port.

As mentioned above, the second latch element 24 will be urged towards the unlatched position, counter to the force of the spring 40, under the influence of the extending movement of the first latch element 21.

If the intention is to retract the piston/piston rod assembly 5, 6 of the drive actuator 1, the'pump 70 will be set in operation in such a manner that the port 74 delivers pressurized hydraulic fluid.

This fluid then passes via line part 75b, at port 55, into the second chamber 38 of the latch actuator 30. The nonreturn valve 61 prevents a flow to the port 57. Consequently, the piston/piston rod assembly 36, 36 of the latch actuator 30 will extend. This leads to the second latch element 24 being actuated, which is moved towards the unlatched position, counter to the force of the spring 40.

Until the unlatching has been completed, only fluid is supplied to the chamber 38. In particular, no fluid is as yet supplied to the chamber 8 of the drive actuator 1.

The port 56 only comes into communication with the chamber 38 when the latching has been eliminated. It is then possible for fluid, which is supplied to the latch actuator 30 via line part 75b, to reach the chamber 9 via line part 75a, with the result that the drive actuator 1 starts to retract.

It will be clear that the latching of the drive actuator 1 is automatically eliminated by hydraulic means as soon as the pump 70 is actually set in operation for that purpose. Furthermore, it will be clear that there is no other way of eliminating the latching, which is highly advantageous for safety reasons. Also, the latching is completely eliminated before the drive actuator is actuated, so that damage to the latching is avoided.

The latching shown also offers protection against any leakage past the piston 6, in particular the seal 7, of the drive actuator. Such leakage could force fluid out of the chamber 9, some of which fluid would then be collected in chamber 8 but some of which would also pass into the line 75. The flow of fluid through the line 75 from the connection 10 of the drive actuator 1 towards the pump 70 or the reservoir 77 causes the latch actuator 30 to adopt its position shown in Figure 1, so that the latching is automatically engaged. For example, if the drive actuator 1 is being or has been extended while the seal 7 is leaking, the latching is therefore continuously active, which increases the safety.

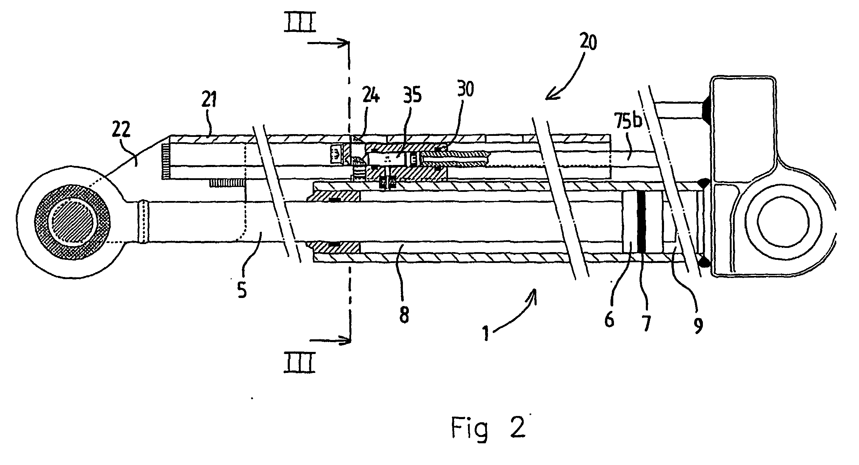

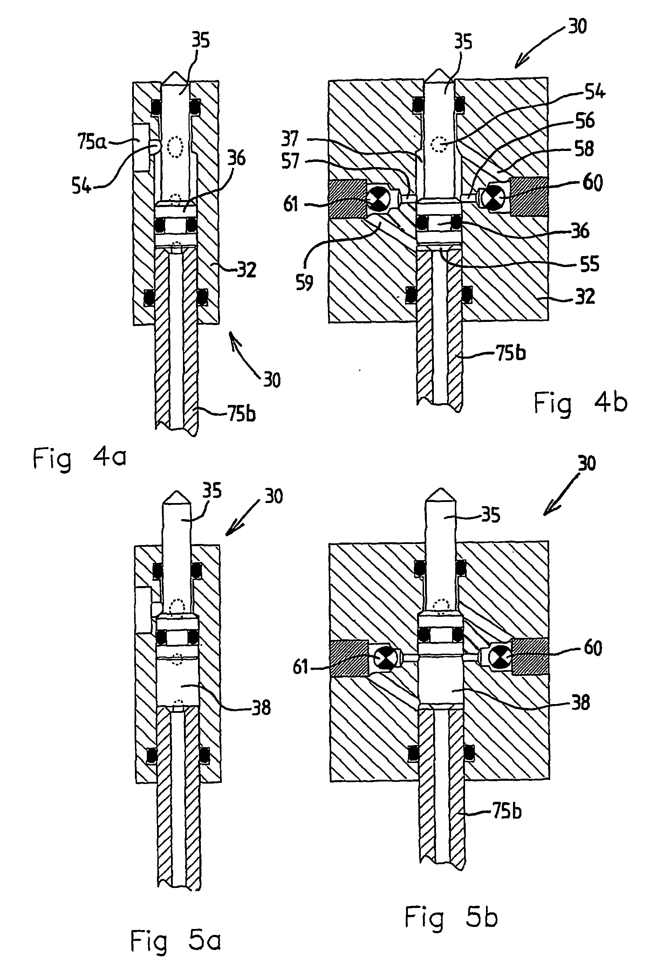

In Figures 2-5, components which correspond to the description given with reference to Figure 1 are denoted by the same reference numerals.

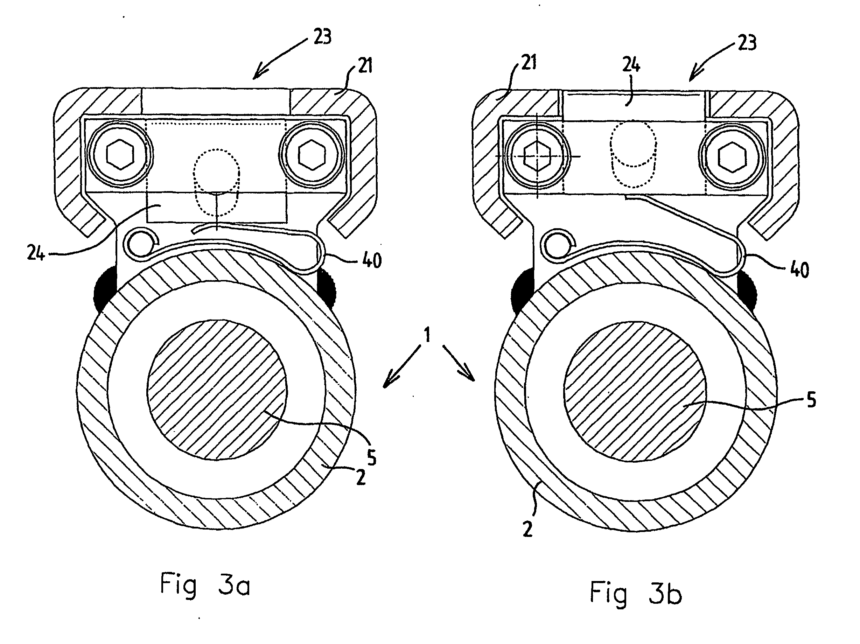

Figures 3a, 3b show that the elongate first latch element 21 is produced from a substantially U-shaped steel section, with the open side facing towards the drive actuator 1. The housing 32 of the latch actuator 30 lies inside the cavity in this U-shaped section 21.

It will be clear that the drive actuator 1 shown, together with its associated hydraulically actuable latching means, is also suitable for other applications as well as that of tilting a vehicle cab. Examples of such applications include the actuation of a component of a convertible top installation for a passenger vehicle or for the actuation of a boot lid, fifth door or the like of a motor vehicle. Obviously, other applications are also possible.

In a significant variant, it is provided that the latching means are not arranged on the hydraulic drive actuator, as described above with reference to the figures, but rather that the latching means lock the object which is driven by the drive actuator in question. In that case, therefore, the latch actuator is positioned elsewhere and the mechanical parts of the latching means are not attached to the drive actuator which drives the object in question.

It is also possible for the latching means to be designed to lock an extending movement of the hydraulic drive actuator instead of or in combination with the latching of the retracting movement explained above. In that case, a latch actuator may be accommodated in the line leading to this drive actuator, via which line hydraulic fluid is fed to the drive actuator in order to cause its piston/piston rod assembly to extend. As a result, the latching is eliminated before the extension commences.

The figures show that the ports 56 and 57 of the latch actuator 30 lie opposite one another. This is not necessary, but is practical. The person skilled in the art will be able to select another suitable position of these ports 56, 57, in particular as a function of the way in which the mechanical parts of the latching means operate. It will be clear that these mechanical parts may also be of considerably more complex design than that which is shown in the present example.

The figures also show that the passages 58, 59 are formed in the housing 32 of the latch actuator 30. This too is not necessary, but is clearly preferred for safety reasons. This is because separate lines with associated connections always have a greater risk of leakage.

Limit switches may be provided in order to switch off the pump 70 when the drive actuator 1 has reached one of its limit positions.

## Claims

1. Hydraulic.actuating device, comprising:
- a hydraulic drive actuator (1) with a cylinder space, inside which a piston is moveable, the piston in the cylinder space delimiting a first chamber and a second chamber, which drive actuator is provided with a first connection (10) and a second connection (11), which are each in communication, via an associated passage, with the first (8) and second (9) chambers, respectively, of the drive actuator,
- a mechanical latching device (21, 24) for latching the drive actuator or an object which is connected to the drive actuator in at least one direction of movement,
which latching device comprises a movable latch element (24) and an associated hydraulic latch actuator (30) for moving the latch element between an unlatched position and a latched position,
wherein the latch actuator (30) has a cylinder space, inside which a piston (36) is moveable, the piston (36) in the piston space delimiting a first chamber (37) and a second chamber (38),
wherein the latch actuator is provided with a first connection (50), which is in communication, via an associated first passage (52), with a first port (54), which in any position of the piston is connected to the first chamber of the latch actuator, the first connection (50) of the latch actuator (30) being in communication with the first and/or second connection of the drive actuator,
wherein the latch actuator furthermore is provided with a second connection (51), which is in communication, via an associated second passage (53), with a second port (55) which is connected to a chamber of the latch actuator,
wherein a third port (56) is connected to the cylinder space of the latch actuator (30), which third port, depending on the position of the piston (36), is in communication with the first chamber (37) of the latch actuator, and wherein the third port (56) is in communication, via a first passage (58) which is preferably formed in the housing, with the first connection (50) of the latch actuator,
the latch actuator (30) furthermore being **characterized in that**:
- the second port (55) is in communication with the second chamber (38) in any position of the piston (36),
- a fourth port (57) is also connected to the cylinder space of the latch actuator the third port (56) and the fourth port (57) each being in communication, depending on the position of the piston (36), with the first chamber (37) or the second chamber (38) of the latch actuator,
- the fourth port (57) is in communication, via a second passage (59) which is preferably formed in the housing, with the second connection (51) of the latch actuator,
- a nonreturn valve (60) which closes in the direction of the third port is provided in the first passage (58) between the third port and the first connection of the latch actuator, and
- a nonreturn valve (61) which closes in the direction of the fourth port is provided in the second passage (59) between the fourth port and the second connection of the latch actuator.

2. Hydraulic actuating device according to claim 1, in which the latch actuator (30) moves the movable latch element into the unlatched position and, in a limit position of the piston of the latch actuator, holds it in this unlatched position, and in which the latch actuator releases the movable latch element in the other limit position of the piston of the latch actuator, the latching device furthermore comprising a spring return mechanism (40) for moving the movable latch element which has been released into the latched position.

3. Hydraulic actuating device according to claim 1 or 2, in which drive actuator and/or latch actuator is a linear actuator having a housing and a cylinder space therein, which at its axial ends is delimited by a first end piece and a second end piece of the housing, a piston/piston rod assembly, which is movable in linearly reciprocating manner, being present in the cylinder space, the piston rod projecting outwards, in a retractable and extendable manner, through the first and/or second end piece.

4. Actuating device according to claim 3, in which the drive actuator is a linear actuator and in which the latch actuator (30) is accommodated in a line (75) which is connected to the chamber (8) which leads to the piston rod of the drive .actuator (1) being retracted.

5. Actuating device according to claim 4, in which the latching device is designed in such a manner that the latching is only eliminated when hydraulic fluid is fed to the chamber of the drive actuator, leading to the piston/piston rod assembly being retracted.

6. Actuating device according to one or more of the preceding claims, in which the latching device comprises an additional latch element, with which the movable latch element can be brought into positively latching engagement.

7. Actuating device according to claim 6, in which the drive actuator is a linear actuator and the additional latch element is arranged on the piston/piston rod assembly at a location which lies outside the housing of the drive actuator and extends alongside the piston rod (5), outside the cylinder space, preferably outside the housing (2), and in which the additional latch element is preferably provided with a series of latching recesses (23) and the movable latch element is designed to fit into these recesses.

8. Device for tilting a vehicle cab, comprising a hydraulic actuating device according to one or more of the preceding claims, the drive actuator being designed to tilt the cab.

9. Motor vehicle provided with a tiltable vehicle cab and a hydraulic actuating device according to one or more of the preceding claims for tilting the cab.

## Patentansprüche

1. Hydraulisches Betätigungsgerät mit:
- einer hydraulischen Antriebsbetätigungsvorrichtung (1) mit einem Zylinderraum, in welchem ein Kolben bewegbar angeordnet ist, wobei der Kolben in dem Zylinderraum eine erste und eine zweite Kammer begrenzt, wobei die Antriebsbetätigungsvorrichtung mit einem ersten Anschluß (10) und einem zweiten Anschluß (11) versehen ist, die jeweils über eine zugehörige Leitung beziehungsweise mit den ersten (8) und zweiten (9) Kammern der Antriebsbetätigungsvorrichtung verbunden sind,
- einer mechanischen Verriegelungsvorrichtung (21, 24), um die Antriebsbetätigungsvorrichtung oder einen Gegenstand, welcher mit der Antriebsbetätigungsvorrichtung verbunden ist, in zumindest einer Bewegungsrichtung zu verriegeln, wobei die Verriegelungsvorrichtung ein bewegbares Verriegelelement (24) und eine zugehörige hydraulische Riegelbetätigungsvorrichtung (30) zum Bewegen des Riegelelements zwischen einer Entriegelungsposition und einer Verriegelungsposition umfaßt, wobei die Riegelbetätigungsvorrichtung (30) einen Zylinderraum aufweist, in welchem ein Kolben (36) bewegbar angeordnet ist, wobei der Kolben (36) in dem Kolbenraum eine erste Kammer (37) und eine zweite Kammer (38) begrenzt, wobei die Riegelbetätigungsvorrichtung mit einem ersten Anschluß (50) versehen ist, welcher über eine zugehörige erste Leitung (52) mit einer ersten Öffnung (54) verbunden ist, welche in jeder Stellung des Kolben mit der ersten Kammer der Riegelbetätigungsvorrichtung verbunden ist, wobei der erste Anschluß (50) der Riegelbetätigungsvorrichtung (30) in Verbindung mit dem ersten und/oder zweiten Anschluß der Antriebsbetätigungsvorrichtung steht,
wobei die Riegelbetätigungsvorrichtung des weiteren einen zweiten Anschluß (51) aufweist, welcher über eine zugehörige zweite Leitung (53) mit einer zweiten Öffnung (55), welche mit einer Kammer der Riegelbetätigungsvorrichtung verbunden ist, in Verbindung steht,
wobei eine dritte Öffnung (56) mit dem Zylinderraum der Riegelbetätigungsvorrichtung (30) verbunden ist, wobei die dritte Öffnung in Abhängigkeit von der Position des Kolbens (36) in Verbindung mit der ersten Kammer (37) der Riegelbetätigungsvorrichtung steht, und wobei die dritte Öffnung (56) über eine erste Leitung (58), welche vorzugsweise in dem Gehäuse ausgebildet ist, mit dem ersten Anschluß (50) der Riegelbetätigungsvorrichtung in Verbindung steht,
wobei die Riegelbetätigungsvorrichtung (30) des weiteren **dadurch gekennzeichnet ist, daß**
- die zweite Öffnung (55) mit der zweiten Kammer (38) in jeder Position des Kolben (36) verbunden ist,
- eine vierte Öffnung (57) auch mit dem Zylinderraum der Riegelbetätigungsvorrichtung verbunden ist, wobei die dritte Öffnung (56) und die vierte Öffnung (57) jeweils in Abhängigkeit von der Position des Kolbens (36) mit der ersten Kammer (37) oder der zweiten Kammer (38) der Riegelbetätigungsvorrichtung verbunden sind,
- die vierte Öffnung (57) über eine zweite Leitung (59), welche vorzugsweise in dem Gehäuse ausgebildet ist, mit dem zweiten Anschluß (51) der Riegelbetätigungsvorrichtung verbunden ist,
- ein Rückschlagventil (60), welches in der Richtung der dritten Öffnung schließt, in der ersten Leitung (58) zwischen der dritten Öffnung und dem ersten Anschluß der Riegelbetätigungsvorrichtung vorgesehen ist, und
- ein Rückschlagventil (61), welches in Richtung der vierten Öffnung schließt, in der zweiten Leitung (59) zwischen der vierten Öffnung und dem zweiten Anschluß der Riegelbetätigungsvorrichtung vorgesehen ist.

2. Hydraulisches Betätigungsgerät nach Anspruch 1, bei welchem die Riegelbetätigungsvorrichtung (30) das bewegbare Riegelelement in die Entriegelungsposition bewegt und es in ein Endposition des Kolbens der Riegelbetätigungsvorrichtung in dieser Entriegelungsposition hält, und bei welchem die Riegelbetätigungsvorrichtung das bewegbare Riegelelement in der anderen Endposition des Kolbens der Riegelbetätigungsvorrichtung freigibt, wobei die Verriegelungsvorrichtung des weiteren eine Feder-Rückstell-einrichtung (40) umfaßt, um das bewegliche Riegelelement, welches in die Verriegelungsposition freigegeben worden ist, zu bewegen.

3. Hydraulisches Betätigungsgerät nach Anspruch 1 oder 2, bei welchem die Antriebsbetätigungsvorrichtung und/oder die Riegelbetätigungsvorrichtung eine lineare Betätigungsvorrichtung ist, die ein Gehäuse und einen darin ausgebildeten Zylinderraum aufweist, welcher an seinen axialen Enden durch ein ersten Enstück und ein zweites Endstück des Gehäuses begrenzt ist, wobei eine Kolben/Kolbenstangen-Anordnung, welche in einer linearen hin- und herbewegenden Weise bewegbar ist, in dem Zylinderraum vorgesehen ist, wobei die Kolbenstange durch das erste und/oder zweite Endstück in einer zurückziehbaren und ausfahrbaren Weise vorsteht.

4. Betätigungsgerät nach Anspruch 3, bei welchem die Antriebsbetätigungsvorrichtung eine lineare Betätigungsvorrichtung ist und bei welchem die Riegelbetätigungsvorrichtung (30) in einer Leitung (75) untergebracht ist, die mit der Kammer (8) verbunden ist, was dazu führt, daß die Kolbenstange der Antriebsbetätigungsvorrichtung (1) zurückgezogen wird.

5. Betätigungsgerät nach Anspruch 4, bei welchem die Verriegelungsvorrichtung in einer solchen Weise ausgebildet ist, daß die Verriegelung nur aufgehoben wird, wenn Hydraulikmittel in die Kammer der Antriebsbetätigungsvorrichtung eingespeißt wird, was dazu führt, daß die Kolben/Kolbenstangen-Anordnung zurückgezogen wird.

6. Betätigungsgerät nach einem oder mehreren der vorherigen Ansprüche, bei welchem die Verriegelungsvorrichtung ein zusätzliches Riegelelement umfaßt, mit welchem das bewegbare Riegelelement in einen positiven Verriegelungseingriff gebracht werden kann.

7. Betätigungsgerät nach Anspruch 6, bei welchem die Antriebsbetätigungsvorrichtung eine lineare Betätigungsvorrichtung ist und das zusätzliche Riegelelement an der Kolben/Kolbenstangen-Anordnung an einer Position, welche außerhalb des Gehäuses der Antriebsbetätigungsvorrichtung liegt, angeordnet ist und sich entlang der Kolbenstange (5) außerhalb des Zylinderraums und vorzugsweise außerhalb des Gehäuses (2) erstreckt, und bei welchem das zusätzliche Riegelelement vorzugsweise mit einer Reihe von Verriegelungsvertiefungen (23) versehen ist und das bewegbare Riegelelement ausgebildet ist, um in diese Vertiefungen zu passen.

8. Gerät zum Kippen eines Fahrzeugfahrerhauses mit einem hydraulischen Betätigungsgerät nach einem oder mehreren der vorhergehenden Ansprüche, wobei die Antriebsbetätigungsvorrichtung ausgebildet ist, um das Fahrerhaus zu kippen.

9. Kraftfahrzeug, das mit einem kippbaren Fahrzeugfahrerhaus und einem hydraulischen Betätigungsgerät nach einem oder mehreren der vorhergehenden Ansprüche zum Kippen des Fahrerhauses vorgesehen ist.

## Revendications

1. Dispositif d'actionnement hydraulique, comprenant :
- un actionneur de commande hydraulique (1) avec un espace cylindre, à l'intérieur duquel un piston est adapté à se mouvoir, le piston dans l'espace cylindre délimitant une première chambre et une deuxième chambre, lequel actionneur de commande est doté d'une première connexion (10) et d'une deuxième connexion (11), qui sont chacune en communication, via un passage associé, avec les première (8) et deuxième (9) chambres, respectivement, de l'actionneur de commande,
- un dispositif de verrouillage mécanique (21, 24) pour verrouiller l'actionneur de commande ou un objet qui est relié à l'actionneur de commande dans au moins un sens de déplacement,
lequel dispositif de verrouillage comprend un élément de verrou mobile (24) et un actionneur de verrou hydraulique associé (30) pour déplacer l'élément de verrou entre une position déverrouillée et une position verrouillée, dans lequel l'actionneur de verrou (30) comporte un espace cylindre, à l'intérieur duquel un piston (36) est adapté à se mouvoir, le piston (36) dans l'espace cylindre délimitant une première chambre (37) et une deuxième chambre (38), dans lequel l'actionneur de verrou est doté d'une première connexion (50), qui est en communication via un premier passage associé (52), avec un premier orifice (54), qui, dans n'importe quelle position du piston, est relié à la première chambre de l'actionneur de verrou, la première connexion (50) de l'actionneur de verrou (30) étant en communication avec la première et/ou deuxième connexion de l'actionneur de commande,
dans lequel l'actionneur de verrou est en outre doté d'une deuxième connexion (51), qui est en communication, via un deuxième passage associé (53), avec un deuxième orifice (55) qui est relié à une chambre de l'actionneur de verrou,
dans lequel un troisième orifice (56) est relié à l'espace cylindre de l'actionneur de verrou (30), lequel troisième orifice, selon la position du piston (36), est en communication avec la première chambre (37) de l'actionneur de verrou, et dans lequel le troisième orifice (56) est en communication, via un premier passage (58) qui est, de préférence, formé dans le boîtier, avec la première connexion (50) de l'actionneur de verrou,
l'actionneur de verrou (30) étant également **caractérisé en ce que** :
- le deuxième orifice (55) est en communication avec la deuxième chambre (38) dans n'importe quelle position du piston (36),
- un quatrième orifice (57) est également relié à l'espace cylindre de l'actionneur de verrou, le troisième orifice (56) et le quatrième orifice (57) étant chacun en communication, selon la position du piston (36), avec la première chambre (37) ou la deuxième chambre (38) de l'actionneur de verrou,
- le quatrième orifice (57) est en communication, via un deuxième passage (59) qui est, de préférence, formé dans le boîtier, avec la deuxième connexion (51) de l'actionneur de verrou,
- un clapet de non retour (60) qui se ferme dans la direction du troisième orifice est prévu dans le premier passage (58) entre le troisième orifice et la première connexion de l'actionneur de verrou, et
- un clapet de non retour (61) qui se ferme dans la direction du quatrième orifice est prévu dans le deuxième passage (59) entre le quatrième orifice et la deuxième connexion de l'actionneur de verrou.

2. Dispositif d'actionnement hydraulique selon la revendication 1, dans lequel l'actionneur de verrou (30) déplace l'élément de verrou mobile dans la position déverrouillée et, dans une position limite du piston de l'actionneur de verrou, le maintient dans cette position déverrouillée, et dans lequel l'actionneur de verrou libère l'élément de verrou mobile dans l'autre position limite du piston de l'actionneur de verrou, le dispositif de verrouillage comprenant également un mécanisme de rappel par ressort (40) pour déplacer l'élément de verrou mobile qui a été libéré dans la position verrouillée.

3. Dispositif d'actionnement hydraulique selon la revendication 1 ou 2, dans lequel l'actionneur de commande et/ou l'actionneur de verrou est un actionneur linéaire comportant un boîtier et un espace cylindre en son sein, qui à ses extrémités axiales est délimité par une première pièce d'extrémité et une deuxième pièce d'extrémité du boîtier, un ensemble piston/tige de piston, qui est adapté à se mouvoir en va-et-vient linéaire, étant présent dans l'espace cylindre, la tige de piston se projetant vers l'extérieur, en se rétractant et se déployant, à travers les première et/ou deuxième pièces d'extrémité.

4. Dispositif d'actionnement selon la revendication 3, dans lequel l'actionneur de commande est un actionneur linéaire et dans lequel l'actionneur de verrou (30) est logé dans une conduite (75) qui est reliée à la chambre (8) qui mène à la tige de piston de l'actionneur de commande (1) étant rétractée.

5. Dispositif d'actionnement selon la revendication 4, dans lequel le dispositif de verrouillage est conçu de façon que le verrouillage ne soit supprimé que lorsqu'un fluide hydraulique est distribué jusqu'à la chambre de l'actionneur de commande, menant à l'ensemble piston/tige de piston étant rétracté.

6. Dispositif d'actionnement selon l'une ou plusieurs des revendications précédentes, dans lequel le dispositif de verrouillage comprend un élément de verrou supplémentaire, avec lequel l'élément de verrou mobile peut être amené en engagement de verrouillage positif.

7. Dispositif d'actionnement selon la revendication 6, dans lequel l'actionneur de commande est un actionneur linéaire et l'élément de verrou supplémentaire est situé sur l'ensemble piston/tige de piston à un emplacement qui se trouve à l'extérieur du boîtier de l'actionneur de commande et s'étend le long de la tige de piston (5), à l'extérieur de l'espace cylindre, de préférence à l'extérieur du boîtier (2), et dans lequel l'élément de verrouillage supplémentaire est, de préférence, doté d'une série d'évidements de verrouillage (23) et l'élément de verrou mobile est conçu pour s'emboîter dans ces évidements.

8. Dispositif pour incliner une cabine d'un véhicule, comprenant un dispositif d'actionnement hydraulique selon l'une ou plusieurs des revendications précédentes, l'actionneur de commande étant conçu pour incliner la cabine.

9. Véhicule à moteur équipé d'une cabine de véhicule inclinable et d'un dispositif d'actionnement hydraulique selon l'une ou plusieurs des revendications précédentes pour incliner la cabine.
